# EUROPÄISCHE PATENTSCHRIFT

(11) **EP 0 404 170 B1**
(45) Veröffentlichungstag und Bekanntmachung des Hinweises auf die Patenterteilung: **09.06.1993**
(21) Anmeldenummer: 90111847.1
(22) Anmeldetag: 22.06.1990
(51) Int. Cl.: E03F 1/00

(54) **Vorrichtung zum Absaugen von Flüssigkeiten**
Installation for the suction of fluids
Installation pour l'aspiration de liquides

(30) Priorität: 23.06.1989 DE 3920665; 26.02.1990 DE 9002257 U
(43) Veröffentlichungstag der Anmeldung: 27.12.1990
(73) Patentinhaber: Roediger Anlagenbau GmbH, D-63450 Hanau (DE)
(72) Erfinder: Galler, Lothar, D-6451 Hammersbach (DE)
(74) Vertreter: Stoffregen, Hans-Herbert, Dr. Dipl.-Phys.

(56) Entgegenhaltungen:
- EP-A- 0 167 642
- DE-C- 686 834
- DE-U- 8 705 898
- LU-A- 85 797

## Beschreibung

Die Erfindung bezieht sich auf eine Vorrichtung zum Absaugen von in einem Tank einer mobilen Einrichtung angesammelter Flüssigkeit wie Abwasser und Sammeln dieser in einem einen Unterdruck aufweisenden Sammelbehälter, wobei an einem Anschluß wie Stutzen des Tanks zum Absaugen der Flüssigkeit eine Absaugeinrichtung wie -pistole anschließbar ist, die über eine Leitung mit dem Sammelbehälter verbunden ist.

Vakuumtoiletten und -entwässerungsanlagen finden nicht nur in Wohnbereichen Anwendung, wo ein natürliches Gefälle nicht zur Verfügung steht, sondern auch bei mobilen Einrichtungen wie Schiffen, Eisenbahnwagen oder Flugzeugen. Hierbei wird das Abwasser wie Fäkalwasser in einem Tank angesammelt, der über eine Vakuumleitung entleert wird (siehe hierzu beispielsweise die Beschreibungs- einleitung der DE-U- 8 705 898). Nachteilig bei dieser Handhabung ist es, daß die Leitungen zum Teil frei herumliegen bzw. Restflüssigkeit auf den Boden gelangt, die aus hygienischer Sicht zu einer unzulässigen Verschmutzung führt. Auch ist für das Bedienungspersonal die Handhabung nicht einfach, da die Absaugeinrichtung wie -pistole gegebenenfalls über größere Strecken getragen werden muß.

Ein in einem Schacht absenkbarer Betankungsarm ist der EP-A-0 167 462 zu entnehmen. Zur Höhenverstellbarkeit weist der Betankungsarm über Drehgelenke verbundene Rohrstücke auf.

In der DE-C-686 834 ist eine Tankanlage mit Meß- und Abfüllgeräten beschrieben, die wahlweise in einem Schacht verstaubar oder aus diesem anhebbar ausgebildet ist.

Aufgabe der vorliegenden Erfindung ist es, eine Vorrichtung der eingangs genannten Art so auszubilden, daß eine einfache Handhabung der Absaugeinrichtung wie Pistole gegeben ist, wobei gleichzeitig mit wenigen Antriebsaggregaten ein Absaugen und ein Anheben bzw. Absenken der Absaugeinrichtung gewährleistet sein soll. Auch soll sichergestellt sein, daß von der Absaugeinrichtung und/oder dem Tankanschluß eventuell heraustropfende Restflüssigkeit nicht zu einer Verschmutzung des Bodenbereichs führen kann.

Die Aufgabe wird erfindungsgemäß dadurch gelöst, daß die Absaugeinrichtung in einem Schacht anordbar und zum Absaugen der Flüssigkeit in die Höhe des Anschlusses anhebbar ist und daß die Absaugeinrichtung über einen Hubzylinder anheb- bzw. absenkbar ist, wobei der Hubzylinder an die zum Absaugen der Flüssigkeit erforderliche Unterdruckquelle angeschlossen ist.

Durch die erfindungsgemäße Lehre ist nur eine Unterdruckquelle nötig, die ein Absaugen von Flüssigkeit und außerdem ein Anheben bzw. Absenken der Absaugeinrichtung ermöglich. Dabei wird der unterdruck in dem Sammelbehälter aufgebaut, in dem die Flüssigkeit gesammelt wird.

Der Schacht ist von einem Deckelelement verschließbar, der vorzugsweise beim Anheben der Absaugeinrichtung von dieser oder einer diese aufnehmenden Halterung verschwenkt wird. So kann die Absaugeinrichtung von einer gabelförmigen Halterung ausgehen, die über der Absaugeinrichtung in Richtung des Deckelelementes hervorstehende Druckrollen aufweist, über die das Deckelelement beim Anheben der Halterung mitverschwenkbar ist. Das Deckelelement kann so ausgebildet sein, daß es bei geöffnetem Schacht als Unfallsicherung wirkt.

Nach einem weiteren hervorzuhebenden Vorschlag der Erfindung kann in dem Schacht angesammelte Flüssigkeit mittels des im Sammelbehälter herrschenden Unterdrucks abgesaugt werden. So kann vom Bodenbereich des Schachtes eine verschließbare Verbindung zu der Vakuumleitung oder dem Behälter ausgehen. Vorzugsweise erfolgt dies in Form eines Abzweiges von der Leitung, die mit der Absaugeinrichtung verbunden ist. Dies im Bodenbereich mündende Öffnung der Abzweigleitung kann dann mit einem von der Schachtöffnung aus bedienbaren Stopfen verschlossen bzw. geöffnet werden.

Eine Reinigung des Schachtes selbst kann durch eine in dieser angeordnete Sprüheinrichtung erfolgen. Hierdurch ist gewährleistet, daß auch innerhalb des Schachtes einwandfreie hygienische Verhältnisse herrschen. Schließlich kann in dem Schacht selbst eine Heizeinrichtung angeordnet sein, um sicherzustellen, daß auch im Winterbetrieb die Funktionstüchtigkeit der Vorrichtung gewährleistet ist.

Weitere Einzelheiten, Vorteile und Merkmale der Erfindung ergeben sich nicht nur aus den Ansprüchen, sondern auch aus der nachfolgenden Beschreibung von der Zeichnung zu entnehmenden bevorzugten Ausführungsbeispielen.

Es zeigen:
- Fig. 1: eine Prinzipdarstellung einer Vorrichtung zum Absaugen von Flüssigkeiten und
- Fig. 2: einen Schacht mit in diesem angeordneter Absaugeinrichtung.

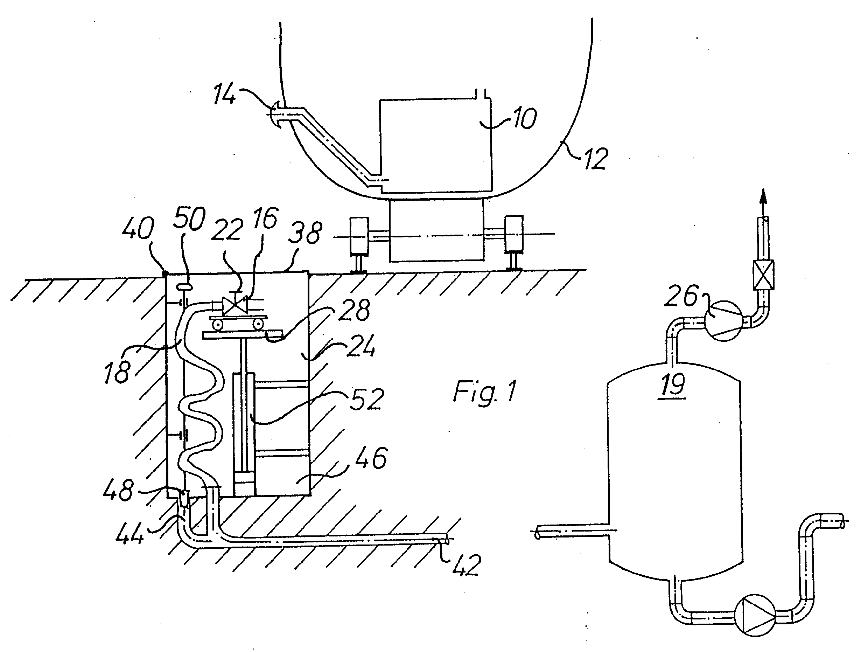

Im Ausführungsbeispiel der Fig. 1 soll ein Tank (10) von zum Beispiel einem Eisenbahnwagen (12) entsorgt werden. In dem Tank (10) sind Flüssigkeiten wie Fäkalabwässer und ähnliches angesammelt. Die Entsorgung erfolgt mittels Vakuum. Hierzu wird an einen Anschlußstutzen (14) eine Absaugeinrichtung (16) angeschlossen, die über eine Leitung wie Schlauch (18) mit einem stationär angeordneten Sammelbehälter (19) verbunden ist, in dem seinerseits mittels einer Pumpe (26) ein Unterdruck erzeugt ist. Der Unterdruck ist dabei auf einen Wert eingestellt, der ausreicht, um den Tank (10) zu entleeren.

Erfindungsgemäß ist nun die Absaugeinrichtung in Form von zum Beispiel einer mit einem Ventil (22) versehenen Absaugpistole (16) in einem Schacht (24) angeordnet, der sich vorzugsweise unterhalb des Stutzens (14) befindet, so daß von diesem herabtropfende Flüssigkeit von dem Schacht (24) aufgenommen wird. Mit anderen Worten ist das Fahrzeug wie der Eisenbahnwagen (12) möglichst so zu positionieren, daß der Stutzen (14) oberhalb des Schachtes (24) zu stehen kommt.

Um zum Absaugen die Absaugeinrichtung (16) problemlos an den Stutzen (14) anschließen zu können, ist erstere auf einer Art Hebebühne (28) angeordnet, die es zudem ermöglicht, daß die Absaugpistole (16) horizontal in beiden Richtungen der Ebene des Stutzens (14) verschoben werden kann, um so ohne anstrengendes Anheben der verschmutzten Elemente eine Verbindung zum Tank (10) herzustellen.

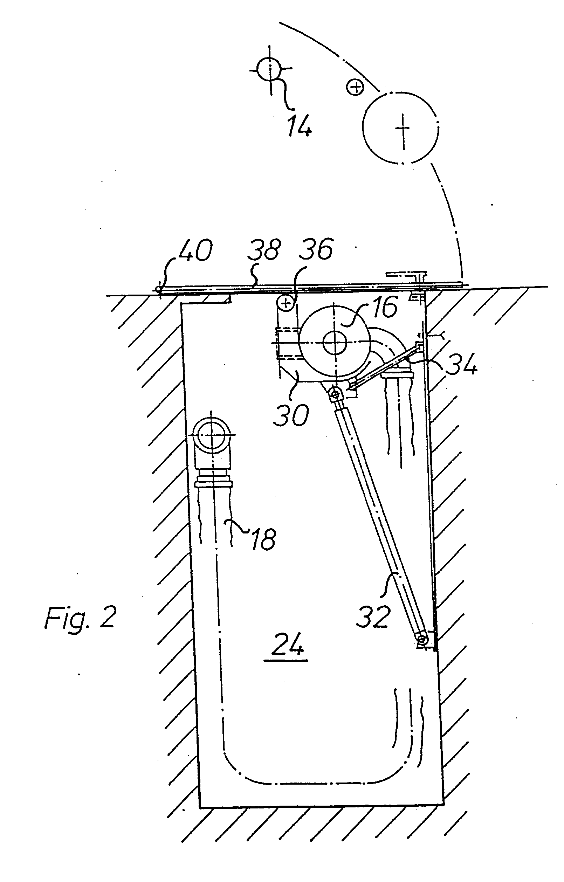

Anstelle der Hebebühne (28) sind gemäß Fig. 2 andere Hebevorrichtungen gleichfalls realisierbar. So geht die Absaugeinrichtung (16) von einer Halterung (30) aus, die von Gasdruckfedern (32) und (34) gehalten wird. Durch Druckbeaufschlagung der Federn (32) und (34) wird die Absaugeinrichtung (16) in die gestrichelte Stellung oberhalb des Schachtes (24) angehoben. Sodann kann die Absaugrichtung (16) von Hand an den rein schematisch dargestellten Anschlußstutzen (14) angeschlossen werden, um so den nicht dargestellten Tank (10) zu entleeren.

Wie der Fig. 2 des weiteren zu entnehmen ist, weist die Halterung (30) bei aufgenommener Absaugeinrichtung (16) oberhalb dieser verlaufende Druckrollen (36), Gleitkufen oder ähnliches auf, die beim Anheben gegen die Unterseite einer den Schacht (24) verschließenden Abdeckung (38) derart wirkt, daß diese aufgeschwenkt wird. Hierzu ist die Abdeckung (38) um eine in der Darstellung links von der Druckrolle (36) verlaufende Achse (40) schwenkbar gelagert.

Die Verbindung zwischen der Absaugeinrichtung (22) und dem Sammelbehälter (19) erfolgt über die flexible Leitung (18) und stationär verlegte Leitungen (42). Von der Leitung (42) geht des weiteren eine Abzweigung (44) aus, die im Bodenbereich (46) des Schachtes (24) mündet und mittels eines Verschlußelementes wie Stopfens (48) verschließbar ist. Der Stopfen (48) ist dabei mittels einer im Öffnungsbereich des Schachtes (24) verlaufende Handhabe (50) betätigbar.

Durch die gleichfalls unter Unterdruck stehende Zweigleitung (44) ist die Möglichkeit gegeben, daß im Bodenbereich (46) des Schachtes (24) angesammelte Flüssigkeit abgesaugt werden kann. Hierdurch ist gewährleistet, daß auch das Innere des Schachtes (24) sauber gehalten werden kann. Zusätzlich kann in dem Schacht (24) eine nicht dargestellte Sprüheinrichtung angeordnet sein, um ein Reinigen zu ermöglichen. Ergänzend kann eine Heizung vorgesehen sein, um auch einen reibungslosen Betrieb in der kalten Jahreszeit zu gewährleisten.

Ist die Hebebühne (28) gemäß Fig. 1 mittels eines Hubzylinders (52) anhebbar, so sind auch andere konstruktive Möglichkeiten gegeben. So kann das Anheben der Absaugeinrichtung auch über Teleskopzylinder erfolgen. Unabhängig von der konstruktiven Lösung ist allein wesentlich, daß die Absaugeinrichtung (22) aus dem Schacht (24) mit geringer Anstrengung herausgefahren werden kann, um an den Stutzen (14) angeschlossen zu werden bzw. nach Entleerung des Tanks (10) zurück in den Schacht (24) gelangt, woraufhin dieser mittels der Deckels (38) verschlossen wird.

Insbesondere ist die Hebebühne (28) jedoch über einen mittels Unterdruck verschiebbaren Hubzylinder anheb- bzw. absenkbar. Als Unterdruckquelle dient dabei diejenige, die auch zum Absaugen des Abwassers mittels der Absaugeinrichtung (16) bzw. zum Entleeren des Schachts (46) über die Leitung (44) benutzt wird.

Nachstehend seien noch weitere hervorzuhebende Merkmale angesprochen, die bei der erfindungsgemäßen Vorrichtung realisiert sein können. So besteht die Möglichkeit, sämtliche im Schacht (24) anordbare Elemente von der Schachtöffnung her auszutauschen. Die Halterung für die Absaugeinrichtung bzw. diese selbst kann mittels eines im Bodenbereich angeordneten Hebels oder ähnliches zum Herausfahren bzw. Zurückfahren betätigt werden. Die Schachtöffnung kann von einer Sperre umgeben sein, um Regenwasser, Schmutzwasser oder ähnliches vom Schachtinneren fernzuhalten. Die Sperre kann abnehmbar ausgebildet sein, um gfl. kontrolliert Schmutz in der Umgebund des Schachtes in diesen zu spülen und aus ihm absaugen zu können. Die Schachtabdeckung kann befahrbar und sollte wasserdicht ausgebildet sein.

## Patentansprüche

1. Vorrichtung zum Absaugen von in einem Tank (10) einer mobilen Einrichtung (12) angesammelter Flüssigkeit wie Abwasser und Sammeln dieser in einem einen Unterdruck aufweisenden Sammelbehälter (19), wobei an einen Anschluß wie Stutzen (14) des Tanks zum Absaugen der Flüssigkeit eine Absaugeinrichtung wie -pistole (16) anschließbar ist, die über eine Leitung (18, 42) mit dem Sammelbehälter (16) verbunden ist,
**dadurch gekennzeichnet,**
daß die Absaugeinrichtung (16) in einem Schacht (24) anordbar und zum Absaugen der Flüssigkeit in die Höhe des Anschlusses (14) anhebbar ist und daß die Absaugeinrichtung (16) über einen Hubzylinder (52) anheb- bzw.absenkbar ist, wobei der Hubzylinder zu dessen Anheben bzw. Absenken an die zum Absaugen der Flüssigkeit erforderliche Unterdruckquelle angeschlossen ist.

2. Vorrichtung nach Anspruch 1,
**dadurch gekennzeichnet,**
daß vom Bodenbereich (46) des Schachtes (24) zu dessen Absaugung eine verschließbare Verbindung (44) zu dem den Unterdruck aufweisenden Behälter (19) ausgeht.

3. Vorrichtung nach Anspruch 1 oder 2,
**dadurch gekennzeichnet,**
daß in dem Schacht (24) eine Sprüheinrichtung und/oder eine Heizung angeordnet ist.

4. Vorrichtung nach zumindest Anspruch 1,
**dadurch gekennzeichnet,**
daß die Öffnung des Schachtes (24) zum Sammeln von Flüssigkeit sich im Bereich unterhalb des Anschlusses (14) des Tankes befindet.

5. Vorrichtung nach zumindest einem der vorhergehenden Ansprüche,
**dadurch gekennzeichnet,**
daß der Schacht (24) von einem Deckelelement (38) abdeckbar ist, das beim Anheben der Absaugeinrichtung (16) von dieser oder einer diese aufnehmenden Halterung (30) verschwenkbar ist.

## Claims

1. A device for drawing off fluid such as waste water which has collected in a tank (10) of a mobile installation (12) and for collecting the said fluid in a collecting container (19) having an underpressure, a suction device or suction piston (16), which is connected via a line (18, 42) with the collecting container (19), being connectable to a terminal or socket (14) of the tank in order to draw off the fluid, characterised in that the suction device (16) can be arranged in a shaft (24) and can be lifted to the level of the terminal (14) in order to draw off the fluid, and that the suction device (16) can be raised and lowered by means of a lifting cylinder (52), the lifting cylinder being connected for its lifting and lowering to the underpressure source required for drawing off the fluid.

2. A device according to claim 1, characterised in that, for draining the shaft (24), a closable connection (44) extends from the base region (46) of the shaft (24) to the underpressure container (19).

3. A device according to claim 1 or 2, characterised in that a spraying device and/or heating element is/are arranged in the shaft (24).

4. A device according to at least claim 1, characterised in that the opening of the shaft (24) for collecting fluid lies in the region beneath the terminal (14) of the tank.

5. A device according to at least one of the preceding claims, characterised in that the shaft (24) can be covered by a lid element (38), which can be pivoted by the suction device (16) or by a mount (30) accommodating the suction device when the latter is lifted.

## Revendications

1. Installation pour l'aspiration de liquide collecté dans un réservoir (10) d'un dispositif mobile (12), tel que eaux résiduaires et introduction de ce liquide dans un réservoir collecteur (19) placé sous dépression, dans laquelle un dispositif d'aspiration tel qu'un pistolet (16) peut être raccordé à un raccordement tel que la tubulure (14) du réservoir servant à aspirer le liquide, ce dispositif pouvant être abaissé et soulevé au moyen d'un cylindre de levage (52) et étant connecté par une conduite (18, 42) avec le réservoir collecteur (16), caractérisée en ce que l'installation d'aspiration (16) peut être disposée dans un puits (24) et être soulevée pour aspirer le liquide à la hauteur du raccordement (14) et en ce que l'installation d'aspiration (16) peut être abaissée et levée au moyen d'un cylindre de levage (42) tandis que le le cylindre de levage est raccordé à la source de dépression nécessaire pour l'aspiration du liquide afin d'effectuer ce mouvement d'abaissement ou de levage.

2. Installation selon la revendication 1,
caractérisée en ce qu'une connexion obturable (44) part de la zone du fond (46) du puits (24) afin d'aspirer celle-ci vers le réservoir (19) sous dépression.

3. Installation selon la revendication 1 ou 2,
caractérisée en ce qu'un dispositif de pulvérisation et/ou un chauffage est monté dans le puits (24).

4. Installation selon au moins la revendication 1,
caractérisée en ce que l'ouverture du puits (24) pour la collecte du liquide se trouve dans la zone en dessous du raccordement (14).

5. Dispositif selon au moins l'une des revendications précédentes, caractérisé en ce que le puits (24) peut être recouvert par un élément de couverture (38) qui peut pivoter quand on soulève l'installation d'aspiration (16) en s'écartant de celle-ci ou bien quand on soulève une fixation (30) supportant celle-ci.
